# EUROPEAN PATENT APPLICATION

(11) **EP 3 023 230 A2**
(43) Date of publication of application: **25.05.2016**
(21) Application number: 15191969.3
(22) Date of filing: 28.10.2015
(51) Int. Cl.: B29C 67/00, B29C 53/04, B65D 5/24, B33Y 10/00, B33Y 30/00

(54) **RELEASE LINER/LAYER, SYSTEM AND METHOD OF USING THE SAME WITH ADDITIVE MANUFACTURING**

(30) Priority: 28.10.2014 US 201462069389 P; 13.10.2015 US 201514881371
(71) Applicant: Full Spectrum Laser LLC, Las Vegas, NV 89120 (US)
(72) Inventor: LIU, Henry, Las Vegas, NV Nevada 89120 (US)
(74) Representative: Derry, Paul Stefan

(57) **Abstract**

Release liner forming structures (120) and methods of making and using the same. The methods of making the release liner (120) include thermoforming and sheet bending. The flexible release liner (120) may be used in conjunction with a rigid, transparent supporting surface (506). The release liner (120) may be developed from a flexible sheet (100) formed into a deformable resin fluid vat (110). A release layer (120), and additional structure if desired, can be formed of or include plastic, such as polyolefin or fluoropolymer. In some instances, the polyolefin is, or includes, polymethylpentene or a fluropolymer is fluorinated ethylene propylene. The optical and other properties of the release layer (120) can be altered with treatments and other materials to, for example, reduce over-penetration of a light beam or deform a release layer (120).

## Description

### FIELD OF THE INVENTION

The embodiments of the present invention relate to release liner technologies for additive manufacturing.

### BACKGROUND OF THE INVENTION

Additive manufacturing, also known as 3D printing, is a term describing a variety of manufacturing technologies in which an object is printed/created from a 3D model through selective accumulation of material. Most additive manufacturing methods create three dimensional objects through sequential construction of thin layers or slices that have edges approximating the object's boundary surfaces. Additive manufacturing technologies include fused deposition modeling (FDM), layered inkjet deposition, selective laser sintering (SLS) and stereolithography.

Stereolithography can be built in a top-down or bottom-up fashion. With the top-down approach, a light beam is directed downward thereby exposing the top surface of a container of light activated resin fluid. The exposed top surface is cured and hardened by exposure to the light beam while a movable elevator build platform sinks into the container allowing a new liquid resin layer to pool up on top of the hardened layer also called a "lamina." The new top surface of resin fluid is exposed to the light beam forming the next solid lamina. This process repeats until a 3D object is formed. Since the build platform sinks into the liquid resin, the container holding the liquid resin must be deep enough to accommodate the height of the object to be printed. In addition, the top of the liquid resin surface must be maintained flat to provide an accurately formed lamina of the object being printed. Often a wiper is employed in order to ensure that the top liquid resin surface is flat.

With the bottom-up approach, light sensitive liquid resin is held in a container or vat with an optically clear bottom. A light beam is directed upward through the clear bottom of the container thereby exposing the liquid resin above the container bottom to the light beam. The light beam exposure cures and hardens a thin bottom lamina adjacent to the container bottom. The hardened lamina is raised upward by raising the elevator build platform allowing new liquid resin to flow onto the bottom surface of the container. The new liquid resin layer is then exposed to the light beam thereby hardening it and adhering to the previous lamina. This process is repeated until the 3D object is complete.

Bottom-up stereolithography provides at least two major benefits: (a) the container holding the liquid resin need not be filled to the height of the object to be printed and thus less liquid resin fill is needed during the 3D printing process; and (b) the liquid surface is flat provided that the container surface supporting the liquid is flat. On the other hand, a long-known problem with bottom-up stereolithography is the adherence of the formed layers to the container surface supporting the layer as the layer is formed. Separation of the formed layer from the container surface can require substantial driving force or relatively complex structure and methods of operation.
Some techniques apply a "release layer" or "release liner" to the surface of the container. The release layer is formed of a material providing reduced levels of adherence to a formed lamina of an object as it is formed from the liquid resin. Polydimethylsiloxane (PDMS) and fluorinated ethylene propylene (FEP) are currently the most widely-used release layer materials.

PDMS is soft and can be damaged relatively quickly by the stereolithography process due to micro-tearing of the surface as formed layers separate from the PDMS release layer. The micro-tears cause the optical clarity of the PDMS layer to gradually degrade. The loss of optical clarity in turn reduces the power and precision of the transmitted light beam that cures the build material therethrough. As a result, the PDMS layer must be replaced resulting in an especially short service life. FEP tends to be more resistant to damage than PDMS, but FEP does not release as well due to its higher level of adherence to formed layers. FEP is also difficult to manufacture since typical adhesives do not adhere well to FEP.

Both PDMS and FEP are also relatively costly. In addition, coating surfaces with PDMS or FEP is difficult and time consuming. This is because: (i) many PDMS formulations present a respiratory hazard during mixing and curing and must be (a) applied to the vat surface in a dust free and temperature-regulated environment and (b) placed on an extremely level surface during curing for 12-48 hours or even longer; and (ii) FEP has very high non-stick properties similar to polytetrafluoroethylene (PTFE), and so FEP does not bond easily to the surface being coated, such as a vat or other build fluid container.

Another long-known problem with bottom-up stereolithography arises from the formed layer abutting the release layer while being immersed in a bath of unhardened resin fluid. In this environment, suction forces provide further resistance to the separation of the formed object layer from the release layer. These suction forces typically are overcome by mechanically peeling or sliding of the release layer with respect to the formed object layer. The additional mechanical and other components required to accomplish such peeling or sliding increase the cost of the printer and the points of possible failure in the printer.

It would be advantageous to address the drawbacks relative to additive manufacturing as noted above.

### SUMMARY

Accordingly, the embodiments of the present invention utilize a release layer material and method of making and using the release layer in additive manufacturing. Some embodiments of the release liner material include a polyolefin, and in some instances, the release liner includes or consists of polymethylpentene.

Some formulations or compositions of such a release layer (or sheet) provide one or more of the following advantages in additive manufacturing: transparency, good gas permeability, reduced or eliminated bonding to resin fluid, reduced suction force, increased peelability, increased service life (in some instances unlimited service life) in an additive manufacturing device, faster process cycle time (in some instances, by an order of magnitude faster), reduced curing light penetration with diffusive surface treatments, reduced or eliminated resin fluid leakage, seam-free construction from a continuous sheet, increased ease of cleaning/removal of stereolithography build materials in both the uncured and cured states, lighter weight of the additive manufacturing device, reduced maintenance of the additive manufacturing device, and others. In one embodiment, the use of polymethylpentene provides all of the aforementioned advantages.

Some embodiments of the present invention utilize a release liner containing a polyolefin, such as polymethylpentene, in conjunction with acrylated resin in stereolithography additive manufacturing such as a bottom-up laser 3D printer. The release liner may be unconstrained or possess various types of constraint or other performance-altering compositions and/or structures added to achieve performance parameters.

Another embodiment of the present invention comprises a container or vat for holding additive manufacturing object-forming material and a method of making and using the same. In one embodiment, the vat is formed of a sheet of material including, or consisting of, polyolefin. In some applications, the polyolefin is polymethylpentene.

In some embodiments, the vat provides a flexible, resilient release liner. The portion of the flexible, resilient release liner in contact with a formed lamina is able to flex during the additive manufacturing process and thus peels away from a formed lamina and returns to its pre-flex position during additive manufacturing. In some embodiments, the release liner is mounted to, or adjacent to, a support wall or plate, and in bottom-up stereolithography, for example, the support plate, in conjunction with the weight of the resin fluid in the vat, forces the release liner to lay flat against the support plate. In some embodiments, the plate is optically clear and, in conjunction with the release liner, provides an optically clear planar build plane. In some embodiments, the release liner can be readily removed and replaced.

The vat can be formed in a wide variety of ways. In certain embodiments, the vat may be formed by bending a sheet of flexible material or by thermoforming a material. In another embodiment, vats are formed from a sheet of flexible, resilient material bent to form retaining walls extending from a flexible, resilient release liner. In other embodiments, the resulting vat is deformable and leakproof during the additive manufacturing process and in some applications, some or all sheet bending reduces or eliminates creases and/or corners that may crack or leak. Further, bending of a flexible sheet to form all or part of a vat is easier and less costly than welding and/or gluing separate pieces together and molding or casting a leakproof one-piece container. In addition, it can be difficult to mold or cast large, thin, optically clear and sufficiently flat surfaces such as are often required for additive manufacturing.

As described herein, the release liner may have varying desired optical properties provided by differing surface treatments. In some instances, varying the surface treatment provides lower-cost laser beam shaping. In some embodiments, one side of the release liner is transparent and the other side is translucent.

In a bottom-up stereolithography embodiment, the transparent surface is on the bottom surface of the release liner and the translucent surface is on the upper surface of the liner. When the stereolithography light beam is emitted from a simple lens and passes through the translucent surface, the light beam is diffused such that the apparent depth of field is reduced and less stereolithography material beyond the desired area is cured.

A first aspect of the specification provides a release layer for use with an additive manufacturing device comprising:
a substantially flat, flexible bottom;
one or more side walls extending upward from a perimeter of said flat, flexible bottom; and
wherein said substantially flat, flexible bottom and said one or more side walls are created by folding one or more flat sheets between about .0005 and about .1 inches thick about a pattern of pre-established bends.

Said flat bottom may be fabricated of a transparent and/or translucent material.

Said flat bottom may be fabricated of a transparent and/or translucent polyolefin or fluoropolymer.

Said transparent and/or translucent polyolefin may be polymethylpenyene. Here, said transparent and/or translucent fluoropolymer may be fluorinated ethylene propylene, polytetrafluoroethylene or perfluoroalkoxy alkanes.

The release layer may further comprise a lip extending outwardly from a top of said one or more walls.

The release layer may further comprise an optically flat sheet for maintaining said bottom in a flat orientation during an additive manufacturing process.

The release layer may further comprise curved junctions and/or corners between adjacent walls and/or adjacent walls and said bottom.

Said bottom may have a transparent lower surface and translucent upper surface.

Said bottom and/or one or more walls may include a memory material.

The release layer may further comprise one or more openings in said one or more side walls.

A second aspect of the specification provides a release layer for use with an additive manufacturing device comprising:
a substantially flat, flexible bottom;
one or more side walls extending upward from a perimeter of said flat bottom; and
wherein said substantially flat, flexible bottom and said one or more side walls are created by thermoforming one or more flat sheets between about .0005 and about .1 inches thick.

Said flat bottom may be fabricated of a transparent and/or translucent material.

Said flat bottom may be fabricated of a transparent and/or translucent polyolefin or fluoropolymer.

Said transparent and/or translucent polyolefin may be polymethylpenyene. Here, said transparent and/or translucent fluoropolymer may be fluorinated ethylene propylene, polytetrafluoroethylene or perfluoroalkoxy alkanes.

The release layer may further comprise a lip extending outwardly from a top of said one or more walls.

The release layer may further comprise an optically flat sheet for maintaining said bottom in a flat orientation during an additive manufacturing process.

The release layer may further comprise curved junctions and/or corners between adjacent walls and/or adjacent walls and said bottom.

Said bottom may have a transparent lower surface and translucent upper surface.

Said bottom and/or one or more walls may include a memory material.

The release layer may further comprise one or more openings in said one or more side walls.

A third aspect of the specification provides a method of creating a release layer for use with an additive manufacturing device comprising:
folding one or more flat sheets of material between about .0005 and about .1 inches thick about a pattern of pre-established bends to form a vat having a substantially flat, flexible bottom and one or more side walls extending upward from a perimeter of said flat, flexible bottom.

The method may further comprise folding one or more sheets of transparent and/or translucent polyolefin or fluoropolymer.

The method may further comprise folding one or more sheets of transparent and/or translucent polymethylpenyene.

The method may further comprise folding one or more sheets of transparent and/or translucent fluorinated ethylene propylene, polytetrafluoroethylene or perfluoroalkoxy alkanes.

The method may further comprise positioning one or more openings in said one or more side walls.

A fourth aspect of the specification provides a method of creating a release layer for use with an additive manufacturing device comprising:
thermoforming one or more flat sheets of material between about .0005 and about .1 inches thick to form a container having a substantially flat, flexible bottom and one or more side walls extending upward from a perimeter of said flat, flexible bottom.

The method may further comprise thermoforming one or more sheets of transparent and/or translucent polyolefin or fluoropolymer.

The method may further comprise thermoforming one or more sheets of transparent and/or translucent polymethylpenyene.

The method may further comprise thermoforming one or more sheets of transparent and/or translucent fluorinated ethylene propylene, polytetrafluoroethylene or perfluoroalkoxy alkanes.

The method may further comprise positioning one or more openings in said one or more side walls.

A fifth aspect of the specification provides an additive manufacturing device comprising:
a laser;
a support plate;
a release layer attached to said support plate; and
wherein said release layer comprises:
   a substantially flat, flexible bottom; and
   one or more side walls extending upward from a perimeter of said flat, flexible bottom.

Said release layer may further comprise a flat bottom fabricated of a transparent and/or translucent material.

Said release layer may further comprise a flat bottom fabricated of a transparent and/or translucent polyolefin or fluoropolymer.

Said transparent and/or translucent polyolefin may be polymethylpenyene.

Said transparent and/or translucent fluoropolymer may be fluorinated ethylene propylene, polytetrafluoroethylene or perfluoroalkoxy alkanes.

Said release layer may further comprise a lip extending outwardly from a top of said one or more walls.

Said release layer may further comprise an optically flat sheet for maintaining said bottom in a flat orientation during an additive manufacturing process.

Said release layer may further comprise curved junctions and/or corners between adjacent walls and/or adjacent walls and said bottom.

Said release layer may further comprise a transparent lower surface and translucent upper surface.

Said release layer may further comprise a memory material.

The additive manufacturing device may further comprise positioning one or more openings in said one or more side walls

A sixth aspect of the specification provides an article for use with an additive manufacturing device comprising:
one or more flat sheets of material between about .0005 and about .1 inches thick attached to a flexible member via glue, ultrasonic welding or laser welding, to form a container having a substantially flat, flexible bottom and one or more side walls extending upward from a perimeter of said flat, flexible bottom.

Said release layer may further comprise a flat bottom fabricated of a transparent and/or translucent material.

Said release layer may further comprise a flat bottom fabricated of a transparent and/or translucent polyolefin or fluoropolymer.

Said transparent and/or translucent polyolefin may be polymethylpenyene.

Said transparent and/or translucent fluoropolymer may be fluorinated ethylene propylene, polytetrafluoroethylene or perfluoroalkoxy alkanes.

Said release layer may further comprise a lip extending outwardly from a top of said one or more walls.

Said release layer may further comprise an optically flat sheet for maintaining said bottom in a flat orientation during an additive manufacturing process.

Said release layer may further comprise curved junctions and/or corners between adjacent walls and/or adjacent walls and said bottom.

Said release layer may further comprise a transparent lower surface and translucent upper surface.

Said release layer may further comprise a memory material.

The additive manufacturing device may further comprise positioning one or more openings in said one or more side walls.

The flexible container may be made from injection molded silicone.

The flexible container may be made from injection molded rubber.

The flexible container may be made from injection molded high density polyethylene plastic.

The flexible container may be made from injection molded flexible plastic.

Other variations, embodiments, and features of the present invention will become evident from the following detailed description, drawings and claims.

### BRIEF DESCRIPTION OF DRAWINGS

Fig. 1 illustrates a plan view of a resilient liner showing planned bend lines for formation of the release liner into a deformable, resilient, one-piece resin fluid vat according to the embodiments of the present invention;
Fig. 2 illustrates a perspective view of the resilient liner of Fig. 1 with a first set of bends formed in the release liner according to the embodiments of the present invention;
Fig. 3 illustrates a perspective view of the resilient liner of Fig. 2 with second and third sets of bends formed in the release liner according to the embodiments of the present invention;
Fig. 4 illustrates a perspective view of the resilient liner of Fig. 3 with a fourth and fifth set of bends formed in the release liner according to the embodiments of the present invention;
Fig. 5A illustrates a cross-sectional view of the resin fluid vat of Fig. 4 mounted on a support plate and containing resin fluid according to the embodiments of the present invention;
Fig. 5B illustrates a cross-sectional view of the resin fluid vat of Fig. 4 with the elevator build platform lifted out of the resin fluid vat according to the embodiments of the present invention;
Fig. 6 illustrates an elevational view of a prior art focused laser beam;
Fig. 7 illustrates a partial, elevational schematic view of prior art bottom-up laser operations associated with laser additive manufacturing showing the shortest and longest positions of the laser beam and variations in laser focal point on the build plane;
Fig. 8 illustrates a partial, elevational schematic view of normal laser focal point location after refraction through a completely transparent surface in a laser additive manufacturing operation;
Fig. 9 illustrates a partial, elevational schematic view of laser beam focal point location after refraction and scattering through transparent material having a matte (light diffusing) surface according to the embodiments of the present invention;
Fig. 10A illustrates a cross-sectional view of a resilient resin fluid vat having a release layer abutting or mounted to one or more sections of metal or other material partial according to the embodiments of the present invention;
Fig. 10B illustrates a cross-sectional view of resilient resin fluid vat having a release layer including a controllably-deformable shape metal alloy according to the embodiments of the present invention;
Fig. 11 illustrates a fluid resin vat formed of a bent sheet of polymethylpentene polymer having a matte upper surface according to the embodiments of the present invention; and
Fig. 12 illustrates a fluid resin vat of thermoformed polymethylpentene polymer according to the embodiments of the present invention.

### DETAILED DESCRIPTION

For the purposes of promoting an understanding of the principles in accordance with the embodiments of the present invention, reference will now be made to the embodiments illustrated in the drawings and specific language will be used to describe the same. It will nevertheless be understood that no limitation of the scope of the invention is thereby intended. Any alterations and further modifications of the inventive feature illustrated herein, and any additional applications of the principles of the invention as illustrated herein, which would normally occur to one skilled in the relevant art and having possession of this disclosure, are to be considered within the scope of the invention claimed.

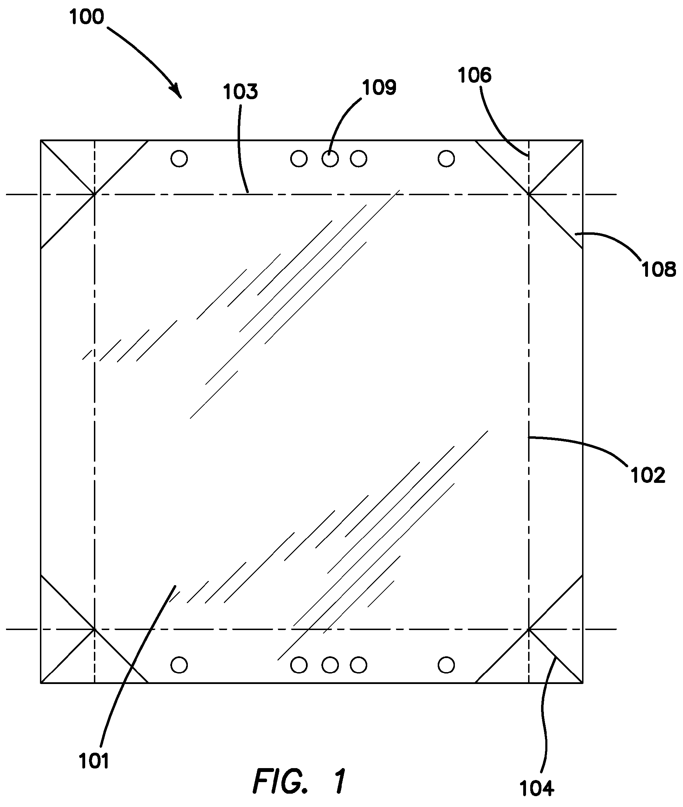

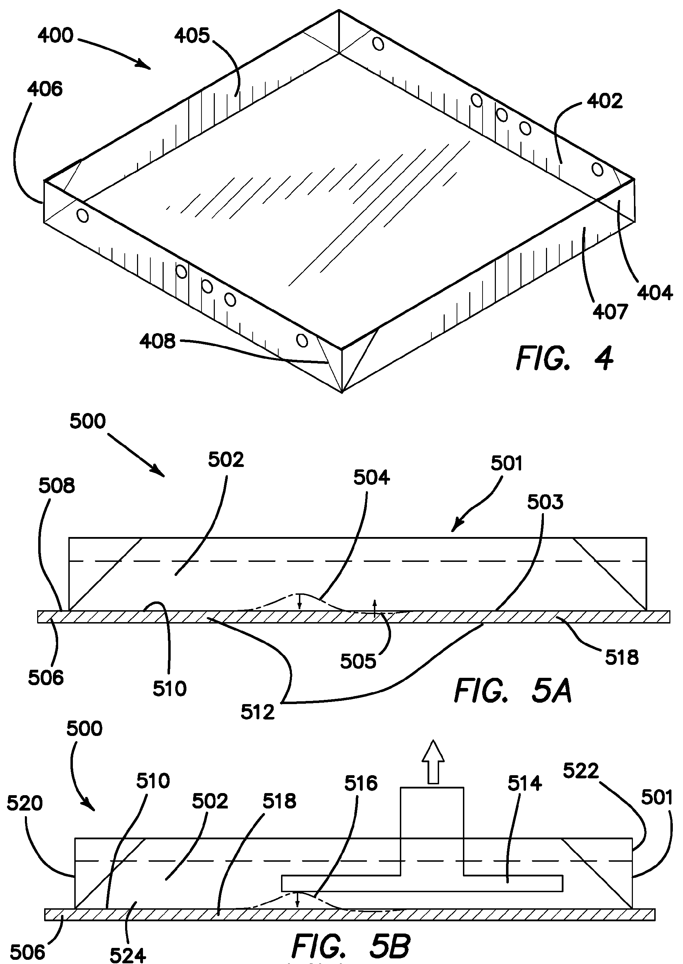

With reference to Fig. 1, a generally planar resilient sheet 101 is formable into a resin fluid vat (not shown in Fig. 1 - see resin fluid vat 314 in Fig. 4). In the embodiment of Fig. 1, the resilient sheet 101 is deformable along a planned layout or pattern of bend lines (e.g., 100, 102, 104 and 106) used to form a release liner vat. First and second sets of two bend lines (e.g., 100, 102) represent future bends that define the bottom perimeter and the vertical walls of the release liner vat. A third set of four bend lines (e.g., 104) represents one of four future diagonal bends (i.e., one for each corner of the release liner vat). A fourth set of bend lines (e.g., 106) represents the future bends that place the remnant corner triangles (not shown in Fig. 1) against the vertical walls. While a square is shown, other shapes may be used for the vat whereby the pattern of bend lines is different.

The resilient sheet 100 may comprise, in whole or in part, a resilient plastic or other resilient material. In some embodiments, the resilient sheet 100 is in whole or in part polyolefin (e.g., polymethylpentene polymer). The applicants have determined that a polyolefin which is available from a number of suppliers provides superior non-stick release properties when used with acrylated resins of the type used to form an additive manufactured objects while being suitable for being glued to itself or other surfaces by use of adhesives such as cyanoacrylate esters (e.g., Krazy Glue™).

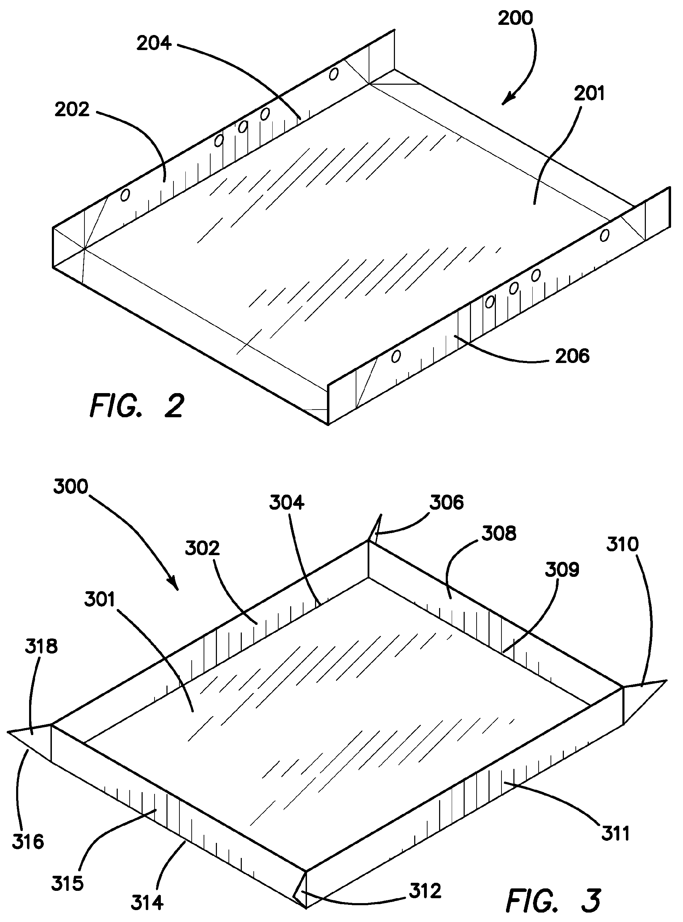

Referring now to Fig. 2, a first set of opposed outer sections 202, 206 of the sheet 200 are bent vertically upward from the horizontal central section 201 of the sheet 200 about the opposed, parallel bend lines 204. Referring now to Fig. 3, a second set of opposed outer sections 308, 315 are then bent vertically upward about the opposed, parallel bend lines 309, 314, and four vertical triangular sections 306, 310, 312 and 318 are formed about the four corner, diagonal bend lines 316, respectively.

With reference to Fig. 4, each of the triangular corner sections 404 are then formed by bending opposed sections of sheet material about bend lines 406 and secured to abut the outer walls 407. The triangular corner sections 404 can be secured to the outer walls 407 by many means including, but not limited to, stapling or other mechanical fasteners, adhesives, thermoforming and/or welding. The result is a complete, deformable, resilient, non-leaking resin fluid vat 400.

With reference to Figs. 1 and 4, additional bends 108 and 408 encourage the floor of the vat 101 to lay flat. Holes 109 in the sheet 100 allow for easy mounting of the vat 400 to an additive manufacturing device.

With reference now to Fig. 5A, the resin fluid vat 501 can be mounted to the top planar surface 508 of a rigid, optically transparent support plate or sheet 506 in an additive manufacturing machine, such as a laser 3D printer. One such printer is a modification of the Pegasus 3D laser printer from Full Spectrum Laser, LLC, of Las Vegas, Nevada. The support plate 506 may be made of glass or sufficiently transparent plastic.

Prior to mounting on the support plate 506, the bottom 510 of the resin fluid vat 501 may have bulged or warped sections 504. The vat 501 can be installed on, and secured to, the support plate 506 by many means including, but not limited to, double stick tape, an adhesive, ultrasonic welding and/or by mechanical clamping to a side wall or bracket in the additive manufacturing machine. The openings 109 in the one or more walls may permit the passage of fasteners as well.

When installed in an additive manufacturing machine, resin fluid 502 is poured into the resin fluid vat 501 in order to perform bottom-up additive manufacturing within the build fluid bath 502 in the resin fluid vat 501. The weight of build fluid 502 in cooperation with the underlying rigid support plate 506 forces the warped sections 504 to lay flat against top planar surface 508 of the support plate 506 providing a planar bottom upper surface 510 along the bottom section 512 of the resin fluid vat 501.

With reference now to Fig. 5B, after an object lamina (not shown) has been formed and adheres to the build plate 514, or to another lamina or set of lumina adhered to the build plate 514, the build plate 514 is lifted. In turn, various portions of the flexible resin fluid vat 501 (such as the bottom 518 and side walls 520, 522, 524) deform sufficiently to allow the release liner section 516 of the fluid resin vat 501 in contact with the formed lumina (not shown) to also be lifted by the suction on the viscous resin from the rising build plate 514 as it moves upward and away from both the lower supporting plate 506 and the lifting release liner section 516. The exact geometry of the deformed release liner section 516 is determined by the geometry of the most-recently formed lamina. As the build plate 514 rises, the deformed release liner section 516 peels away from the most-recently formed lamina. After the release liner section 516 has peeled away from the most-recently formed lamina, the resilient resin fluid vat 501 generally returns to its prior, non-deformed shape and the build plate 514 lowers back into the resin fluid vat 501 spaced from the vat's upper surface 510.

This release-liner peeling away process substantially reduces, and in some embodiments, greatly reduces, the suction effect and resistance to complete separation between the two flat surfaces as shown in the prior art (i.e., with a bottom-up additive manufacturing device the upper resin fluid support surface entirely moving apart from the lower surface of the last formed lamina). In some embodiments, this is caused by the release layer surface separating from a formed lamina at a point or along a line instead of throughout a plane between the formed lamina and build surface surrounded by the fluid resin bath. An additive manufacturing device utilizing the release-liner peeling away process is thus more economically manufactured, lasts longer, weighs less, is easier to maintain and operates more quickly than prior art additive manufacturing devices, such as for example stereolithography 3D printers.

Particularly (though not exclusively) in embodiments utilized with relatively compact laser 3D printers, the resilient sheet 100 may have a thickness from about 0.0001 inches to about 0.25 inches, preferably from about 0.005 to about 0.15 inches, and in one embodiment about 0.010 inches. In embodiments where flexibility is desired, if the resilient sheet 100 is too thick, the liner 100 will not be sufficiently flexible; and if the resilient sheet 100 is too thin, the liner will not have enough stiffness to support itself and contain liquid and may also be susceptible to tearing during forming processes.

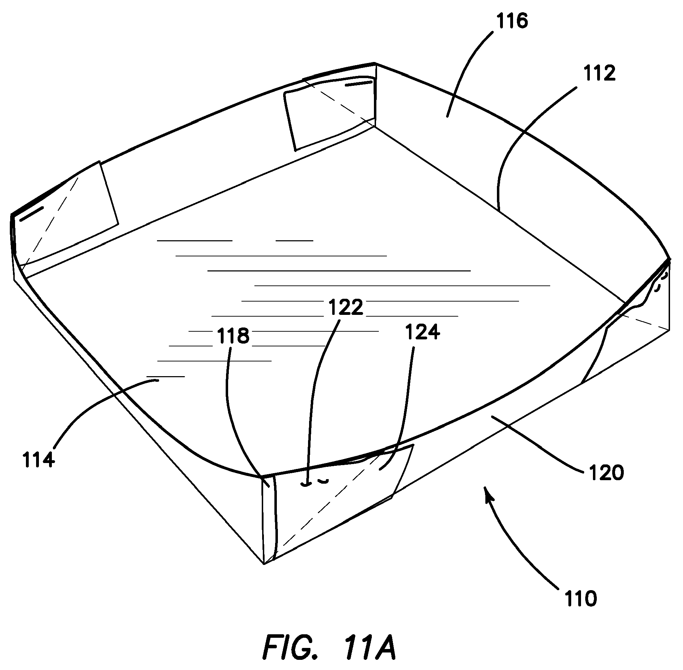

With reference now to Fig. 11, a fluid resin vat 110 formed of a bent sheet of flexible, resilient plastic can be formed to provide curved junctions or corners 112 between the release liner floor 114 and adjacent, upwardly extending side walls 116 of the vat 110. The curved junctions 112 reduce or eliminate cracking or leaking of the vat 110 as it deforms, flexes and returns to its original shape during the additive manufacturing processes using the vat 110. The curved junctions 112 also facilitate vat deformation, flexing and returning to its original shape during the additive manufacturing processes. In this embodiment, the triangular corner sections 118 are secured to their mating sidewalls 120 by stapling 122 and tape 124 but other means may be used. The plastic is polymethylpentene polymer.

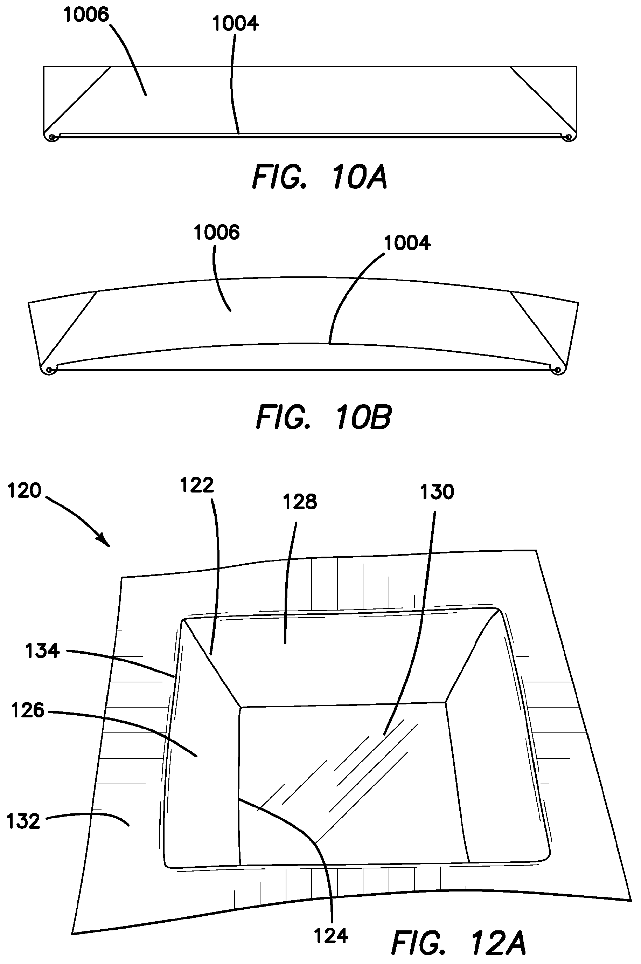

In some embodiments, the resin fluid vat can be formed in other ways. In some embodiments, for example, the vat 120 may be thermoformed of flexible, resilient plastic such as shown in Fig. 12. In the particular embodiment of Fig. 12, the vat 120 is formed from a single, integral sheet of polymethylpentene polymer and includes curved junctions or corners 122, 124, respectively, interconnecting each adjacent pair of side walls 126, 128 and vat release liner bottom 130 and side wall 126 extending upward at slightly less than a 90° angle from the release liner bottom 130. In addition, the vat 120 further includes an upper vat lip section 132 extending laterally and outwardly from the upper end 134 of each of the four upwardly extending side walls 126 and upwardly extending corners 122. The vat lip section 132 helps stabilize the container structure of the vat 120 as well as provide one or more surfaces and structures that may be utilized to locate and/or secure the vat 120 in an additive manufacturing device or process.

In some embodiments, the vat may not be flexible and may instead be made of relatively rigid material such as about 0.25 inch thick plastic. One such embodiment of the resin fluid vat includes, in whole or in part, polymethylpentene polymer and may utilize supporting structure under the vat. Other materials that may be utilized to form the vat are FEP, PDMS and/or PTFE.

Some embodiments utilize polymethylpentene and/or other plastics (e.g., other polyolefins) and/or materials having generally similar properties as the release liner in conjunction with other structure providing the fluid resin vat. Similarly, embodiments of a top-down additive manufacturing device may utilize polymethylpentene and/or other plastics and/or materials having generally similar properties as a release liner as well, in conjunction with, or part of or all of a platform on which a 3D object is printed using the additive manufacturing device.

The release liner may include other components or compositions to alter its properties as desired. In the embodiment of Fig. 10A, one or more sections of metal or other material 1004 can be mounted or layered on (or incorporated within) the release layer 1006. In some embodiments, such as shown in Fig. 10B, the material 1004 can be a shape metal/memory alloy or other material that controllably deforms when subjected to heat or electricity and returns to, with reference back to Fig. 10B, its original shape 1004 when the heat or electricity is removed. In some embodiments, this allows for controlled bending, twisting or other movement of the release liner, which can reduce suction forces that otherwise resist the separation of the formed lamina from a surface during the additive manufacturing process. In some embodiments, shape metal or memory alloy enhance or induce controlled warping of the release liner can also provide reduced layer printing cycle time by reducing the amount of lift/travel in the Z-axis controlling the amount of warping in a specific location on the release liner enhancing the release between the printed item and the release liner.

In another embodiment, an article for use with an additive manufacturing device comprises: one or more flat sheets of material between about .0005 and about .1 inches thick attached to a flexible member via glue, ultrasonic welding or laser welding, to form a container having a substantially flat, flexible bottom and one or more side walls extending upward from a perimeter of said flat, flexible bottom.

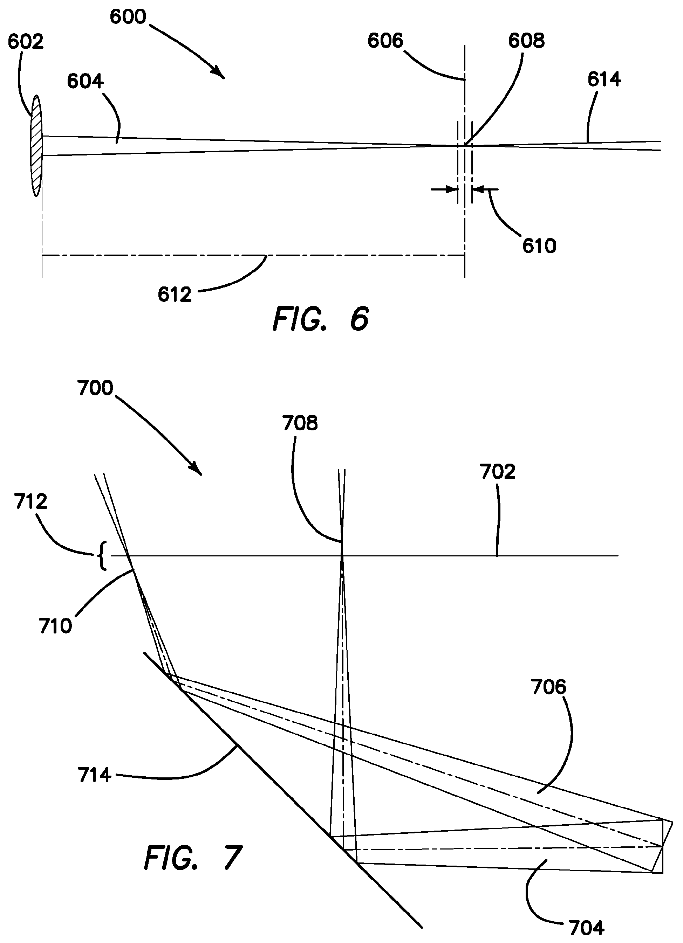

Now referring to Fig. 6, one type of prior art optical focal system 600 has a laser emitter 602 that emits a converging laser beam 604 to a focal point 608 and provides a usable depth of field 610 at a fixed focal length 612. As the laser light 614 travels beyond the depth of field 610 (to the right of 610), the laser light diffuses and becomes insufficiently concentrated to activate resin fluid, such as resin fluid within the depth of field in a laser additive manufacturing device. Expanding the depth of field 610 to solve this problem can result in over-penetration of the beam into the build fluid.

Now referring to Fig. 7, a prior art additive manufacturing system can provide differing laser beam paths directed by an angled mirror 714 upwardly toward the build plane 702 in a bottom-up stereolithography (not otherwise shown in Fig. 7). A first laser beam path 704 can be directed at the center of the stereolithography build plane 702 with a focal point 708 slightly above the build plane within a predetermined depth of field 712. A second laser beam path 706 can be directed at a point significantly away from the center of the build plane 702 with the focal point 710 slightly below the build plane but still within the depth of field 712.

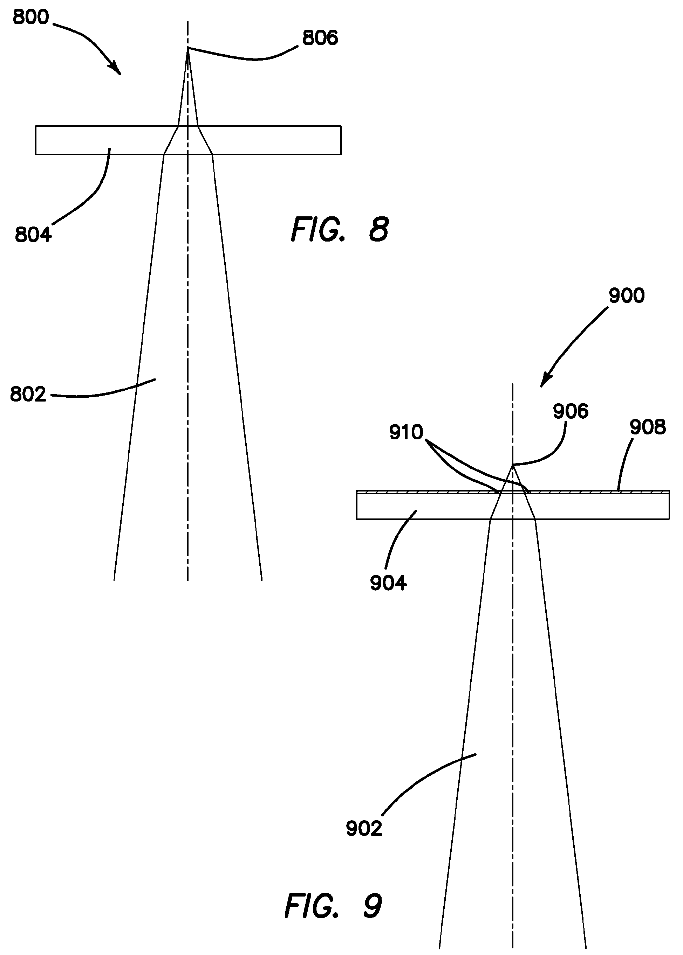

Now referring to Fig. 8, a laser stereolithography system 800 can have a laser beam 802, an optically transparent, polished release layer 804 (such as provided by the resin fluid vat or other layer) and focal point 806. The transparent release layer 804 diffracts the laser beam 802 to some degree, focusing the laser beam 802 at a shorter focal point 806 from the beam emitter (not shown in Fig. 8) than would otherwise be the case without the transparent release layer being in the laser beam's 802 path (not shown). The release layer 804 thus provides a shortened focal point if desired.

Now referring to Fig. 9, an alternative laser stereolithography system 900 has a laser beam 902, a generally transparent release layer 904 with an upper matte, translucent but not transparent surface 908, focal point 906 and diffused energy 910. The matted surface 908 thus diffuses the laser beam 902 and further shortens the laser beam's depth of field as compared to the depth of field if the release layer 904 were completely transparent (and thus not having an upper matte surface) as shown in Fig. 8. The matte release layer 904 thus provides a further shortened focal point above the matte release layer 904 if desired.

By way of example, if a laser beam should focus and activate resin fluid at a length of 270 mm at the center of a build plane and 305 mm at that edges of the build plane, the laser beam may be focused at 285 mm along with a 40 mm depth of field. This provides activation of resin fluid at the edges (285+20=305mm) and at the center of the build plane (285-20=265 mm, which encompasses 270 mm). However when this may cause over-penetration of the laser beam into the fluid resin (and resulting undesired curing) at some location from the center or outward from the center of the build plane, use of a diffusing surface, such as a matter surface, on a desired portion of the upper surface can help reduce or eliminate such over-penetration of the beam.

As used in this specification, the term "transparent" means that about 90%-100% of light will pass through the material. This specification covers any release layer, or portions of a release layer, which may transmit any amount of light as needed or desired for a given application or system.

Although the invention has been described in detail with reference to several embodiments, additional variations and modifications exist within the scope of the invention as described and defined in the following claims.

## Claims

1. A release layer for use with an additive manufacturing device comprising:
a substantially flat, flexible bottom;
one or more side walls extending upward from a perimeter of said flat, flexible bottom; and
wherein said substantially flat, flexible bottom and said one or more side walls are created by folding one or more flat sheets between about .0005 and about .1 inches thick about a pattern of pre-established bends or by thermoforming one or more flat sheets between about .0005 and about .1 inches thick.

2. The release layer of claim 1 wherein said flat bottom is fabricated of a transparent and/or translucent material.

3. The release layer of claim 1 wherein said flat bottom is fabricated of a transparent and/or translucent polyolefin or fluoropolymer.

4. The release layer of claim 3 wherein said transparent and/or translucent polyolefin is polymethylpenyene, or wherein said transparent and/or translucent fluoropolymer is fluorinated ethylene propylene, polytetrafluoroethylene or perfluoroalkoxy alkanes.

5. The release layer of any preceding claim, further comprising a lip extending outwardly from a top of said one or more walls.

6. The release layer of any preceding claim, further comprising an optically flat sheet for maintaining said bottom in a flat orientation during an additive manufacturing process.

7. The release layer of any preceding claim, further comprising curved junctions and/or corners between adjacent walls and/or adjacent walls and said bottom.

8. The release layer of any preceding claim, wherein said bottom has a transparent lower surface and translucent upper surface.

9. The release layer of any preceding claim, wherein said bottom and/or one or more walls include a memory material.

10. The release layer of any preceding claim, further comprising one or more openings in said one or more side walls.

11. A method of creating a release layer for use with an additive manufacturing device comprising:
folding one or more flat sheets of material between about .0005 and about .1 inches thick about a pattern of pre-established bends to form a vat having a substantially flat, flexible bottom and one or more side walls extending upward from a perimeter of said flat, flexible bottom, or
thermoforming one or more flat sheets of material between about .0005 and about .1 inches thick to form a container having a substantially flat, flexible bottom and one or more side walls extending upward from a perimeter of said flat, flexible bottom.

12. The method of claim 11, further comprising folding, or thermoforming, one or more sheets of transparent and/or translucent polyolefin or fluoropolymer, for instance transparent and/or translucent polymethylpenyene, or alternatively transparent and/or translucent fluorinated ethylene propylene, polytetrafluoroethylene or perfluoroalkoxy alkanes.

13. The method of claim 11 or claim 12, further comprising positioning one or more openings in said one or more side walls.

14. An additive manufacturing device comprising:
a laser;
a support plate;
a release layer attached to said support plate; and
wherein said release layer is as claimed in any of claims 1 to 10.

15. An article for use with an additive manufacturing device comprising:
one or more flat sheets of material between about .0005 and about .1 inches thick attached to a flexible member via glue, ultrasonic welding or laser welding, to form a container having a substantially flat, flexible bottom and one or more side walls extending upward from a perimeter of said flat, flexible bottom.
